# FASCICULE DE BREVET EUROPEEN

(11) **EP 4 208 356 B1**
(45) Date de publication et mention de la délivrance du brevet: **14.08.2024**
(21) Numéro de dépôt: 21778174.9
(22) Date de dépôt: 02.09.2021
(51) Int. Cl.: B60C 9/00, B60C 9/18, B60C 9/20, B60C 11/03

(54) **PNEUMATIQUE POUR VEHICULE AGRICOLE DE GRANDE DIMENSION**
GROSSER REIFEN FÜR LANDWIRTSCHAFTLICHES FAHRZEUG
LARGE-SIZED TIRE FOR AGRICULTURAL VEHICLE

(30) Priorité: 04.09.2020 FR 2008989
(43) Date de publication de la demande: 12.07.2023
(73) Titulaire: COMPAGNIE GENERALE DES ETABLISSEMENTS MICHELIN, 63040 Clermont-Ferrand (FR)
(72) Inventeur: JOHNSON, Philippe, 63040 CLERMONT-FERRAND CEDEX 9 (FR); DIDANE, Nizar, 63040 CLERMONT-FERRAND CEDEX 9 (FR)
(74) Mandataire: M.F.P. Michelin
(86) Numéro de dépôt international: PCT/FR2021/051509
(87) Numéro de publication internationale: WO 2022/049347

(56) Documents cités:
- EP-A1- 2 934 917
- EP-A1- 2 934 917
- WO-A1-2019/073143
- WO-A1-2019/073143
- WO-A1-2020/128236
- WO-A1-2020/128236
- FR-A1- 3 090 493
- FR-A1- 3 090 493
- US-A- 5 411 067
- US-A- 5 411 067

## Description

La présente invention a pour objet un pneumatique radial pour véhicule agricole dit pulvérisateur destiné à épandre des engrais et des produits phytosanitaires, et concerne plus particulièrement son armature de sommet.

Les spécifications dimensionnelles et les conditions d'usage (charge, vitesse, pression) d'un pneumatique pour pulvérisateurs sont définies par l'usage. Les pneumatiques sont de grande dimension de manière à passer au-dessus des cultures sans les toucher. Le diamètre des jantes de montage de ces pneumatiques est au moins égal à 42 pouces. Pour ce type de pneumatique, la pression de gonflage recommandée correspondant à la capacité de charge indiquée est le plus souvent au plus égale à 4bar, mais peut descendre jusqu'à 3.2 bar pour un pneumatique IF (« Improved Flexion » : Flexion améliorée) ou VF (« Very high Flexion » : Très haute flexion). La vitesse maximale de ces pneumatiques est de 65 Km/h correspondant à l'indice de vitesse D et peut monter jusqu'à 70 km/h, correspondant à l'indice de vitesse E. L'indice de charge de ces pneumatiques est au moins égal à 170 (6000 Kg). Les pneumatiques pour pulvérisateurs ont comme caractéristique de pouvoir supporter des vitesses élevées sur route bitumée, et des charges importantes car ils supportent dans certaines configurations du véhicule, le poids du produit à pulvériser mais ils ne nécessitent qu'une capacité de traction sur sol meuble moyenne car le véhicule n'est pas destiné à tracter un autre outil telle une charrue nécessitant un effort de traction intense.

US 5 411 067 A décrit un pneumatique pour véhicule agricole qui comprend une bande de roulement, destinée à venir en contact avec un sol par l'intermédiaire d'une surface de roulement, dont les deux extrémités axiales sont reliées, par l'intermédiaire de deux flancs, à deux bourrelets assurant la liaison mécanique entre le pneumatique et la jante sur laquelle il est destiné à être monté.

Dans ce qui suit, les directions circonférentielle, axiale et radiale désignent respectivement une direction tangente à la surface de roulement et orientée selon le sens de rotation du pneumatique, une direction parallèle à l'axe de rotation du pneumatique et une direction perpendiculaire à l'axe de rotation du pneumatique.

Un pneumatique radial pour véhicule agricole comprend une armature de renforcement, constituée d'une armature de sommet, radialement intérieure à la bande de roulement, et d'une armature de carcasse, radialement intérieure à l'armature de sommet.

La bande de roulement d'un pneumatique pour véhicule agricole comprend généralement une pluralité d'éléments en relief, appelés éléments de sculpture ou blocs, s'étendant radialement vers l'extérieur à partir d'une surface portante ou fond de sculpture jusqu'à la surface de roulement, et le plus souvent séparés les uns des autres par des creux ou sillons. Ces éléments de sculpture sont le plus souvent des barrettes ayant généralement une forme allongée globalement parallélépipédique, comprenant au moins une portion rectiligne ou curviligne.

L'armature de carcasse d'un pneumatique radial pour véhicule agricole comprend au moins une couche de carcasse reliant les deux bourrelets entre eux. Une couche de carcasse comprend des renforts, ou éléments de renforcement, enrobés par un matériau polymérique comprenant un élastomère, obtenu par mélangeage, ou mélange élastomérique. Les renforts de couche de carcasse sont le plus souvent constitués par des matériaux polymériques textiles, tels qu'un polyester, par exemple. Les renforts d'une couche de carcasse sont sensiblement parallèles entre eux et forment, avec la direction circonférentielle, un angle compris entre 85° et 95°.

L'armature de sommet d'un pneumatique radial pour véhicule agricole comprend une superposition de couches de sommet s'étendant circonférentiellement, radialement à l'extérieur de l'armature de carcasse. Chaque couche de sommet est constituée de renforts enrobés par un mélange élastomérique et parallèles entre eux. Lorsque les renforts d'une couche de sommet forment, avec la direction circonférentielle, un angle au plus égal à 10°, ils sont dits circonférentiels, ou sensiblement circonférentiels, et assurent une fonction de frettage limitant les déformations radiales du pneumatique. Lorsque les renforts d'une couche de sommet forment, avec la direction circonférentielle, un angle au moins égal à 10° et le plus souvent au plus égal à 40°, ils sont appelés renforts à angle et ont une fonction de reprise des efforts transversaux, parallèles à la direction axiale, appliqués au pneumatique. Les renforts des couches de sommet peuvent être constitués par des matériaux polymériques textiles, tels qu'un polyester, par exemple, ou par des matériaux métalliques, tels que l'acier.

Un pneumatique pour véhicule agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour véhicule agricole doit présenter un compromis de performances entre, de façon non exhaustive, la traction en champ sur sol meuble, la résistance aux arrachements, la résistance à l'usure sur route, la résistance à l'avancement, le confort vibratoire sur route, l'endurance à la fatigue due au nombre de cycles, la masse.

Un problème essentiel pour l'utilisation d'un pneumatique en champ est de limiter au maximum la compaction du sol par le pneumatique, susceptible de nuire aux cultures. C'est la raison pour laquelle, dans le domaine agricole, des pneumatiques à basse pression, donc à forte flexion, ont été développés. Le standard ETRTO (« European Tire an Rim Technical Organisation » : Organisation Technique Européenne du Pneumatique et de la Roue) distingue ainsi les pneumatiques IF (Improved Flexion ou flexion améliorée) et VF (Very high Flexion ou très haute flexion), avec une pression de gonflage maximale recommandée généralement égale à 300 kPa. Selon le standard, par rapport à un pneumatique standard, un pneumatique IF a une capacité de charge augmentée de 20%, et un pneumatique VF a une capacité de charge augmentée de 40%, pour une pression de gonflage égale à 160 kPa.

Une des voies de recherche essentielle dans un monde aux ressources limitées est de réduire la masse des produits utilisés pour la fabrication du pneumatique.

Toutefois l'utilisation de pneumatiques pour les pulvérisateurs à forte vitesse sur route et à forte flexion sur sol meuble à basse pression demande une forte endurance des éléments de renforcement notamment sous les barrettes de la sculpture. Ainsi, l'armature de sommet des pneumatiques pour pulvérisateurs comprennent six couches de sommet à renforts textiles. Le document EP 2934917 décrit un essai de pneumatique IF comprenant une armature de sommet comprenant au moins deux couches de sommet à renforts métalliques, combinée avec une armature de carcasse comprenant au moins deux couches de carcasse à renforts textiles.

Mais l'utilisation de couches de sommet à renforts métalliques, dans un pneumatique pour véhicule agricole, peut entrainer une diminution de l'endurance du sommet du pneumatique, du fait d'une rupture prématurée des renforts métalliques.

Les inventeurs se sont donnés pour objectif de maintenir l'endurance d'une armature de sommet d'un pneumatique agricole VF configuré pour être utilisé sur un pulvérisateur, jusqu'à un niveau au moins équivalent à celle d'une armature de sommet avec 6 couches de travail d'éléments de renforcement textiles, tout en diminuant le nombre de couches de travail pour diminuer la masse du pneumatique et améliorer sa résistance au roulement.

Ce but a été atteint par un Pneumatique radial pour véhicule de type agricole, VF (« Very high Flexion ») selon le standard ETRTO 2020 dont l'indice de vitesse est au moins égal à D pour une vitesse maximale au moins égale à 65 km/h, destiné à être monté sur une jante dont le diamètre est au moins égal à 42 pouces, dont la pression d'utilisation maximale est au moins égale à 3.2 bars et dont l'indice de charge est au moins égal à 170, comprenant :
- Une bande de roulement (2) destinée à venir en contact avec un sol par l'intermédiaire d'une surface de roulement, d'une largeur axiale LT et comprenant une partie centrale d'une largeur axiale LT/2 et deux parties axialement extérieures chacune d'une largeur axiale LT/4,
- Les deux parties axialement extérieures comprenant des blocs de sculpture (21) d'une hauteur radiale h au moins égale à 30 mm, ces blocs ayant une longueur axiale au moins égale à 80% de la largeur axiale LT/4 des parties axialement extérieures de la bande de roulement et d'une épaisseur circonférentielle ep au moins égale à 55 mm,
- Une armature de sommet (3) radialement intérieure à la bande de roulement(2), comprenant au plus 4 couches de travail (31, 32, 33, 34), chaque couche de travail comprenant des éléments de renforcement textiles parallèles entre eux enrobés d'un matériau caoutchouteux et formant des angles avec la direction circonférentielle, au moins égaux à 15° et au plus égaux à 45°,
- Lesdits éléments de renforcement textiles comprenant au moins un toron constitué par un assemblage d'au moins deux fibres textiles,
- les éléments de renforcement des couches de travail ayant une force à la rupture en traction au moins égale à 32 daN et comprenant un toron de polyamide aromatique (aramide) et un toron de polyéthylène téréphtalate (PET) ou de polyamide aliphatique (nylon), le toron d'aramide ayant une force à la rupture au moins égale à 30 daN.

La solution fonctionne particulièrement bien pour des pneumatiques agricoles à blocs ou à barrettes, qui sont de longs blocs de sculpture dont la largeur axiale est proche la demi-largeur axiale de la bande de roulement. Concevoir une sculpture plus compacte avec des sillons et des blocs de moindre dimension en hauteur radiale notamment, permettrait certainement de trouver une solution plus allégée grâce à un meilleur échange thermique entre les couches de sommet et l'extérieur du pneumatique et en diminuant la flexion du sommet au droit des barrettes. Une telle sculpture permettrait de diminuer les sollicitations mécaniques et thermiques pour l'utilisation de câbles métalliques par exemple mais serait pénalisée en adhérence sur sol meuble.

Les blocs de sculpture des parties axialement extérieures de la bande de roulement des pneumatiques considérés par l'invention, ont une largeur axiale au moins égale à 80% de la largeur axiale des parties axialement extérieures de la bande de roulement, à savoir LT/4, LT étant la largeur axiale de la bande de roulement. Par cela, on entend que la distance axiale de l'extrémité axialement extérieure du bloc de sculpture à son extrémité axialement intérieure est au moins égale à 80% du quart de largeur axiale de la bande de roulement. La largeur axiale sera mesurée, le pneumatique étant neuf, et pour éviter les détails du flancs, les points de mesures seront pris appartenant au bloc et sur sa surface de roulement. Pour un fonctionnement efficace sur sol meuble, la hauteur sculpture ou hauteur radiale des barrettes ou bloc de sculpture est au moins égale à 30 mm. Par ailleurs une solution préférée pour limiter les contraintes thermiques tout en conservant une traction à neuf sur sol meuble suffisante pour l'usage des pulvérisateurs, est que la hauteur de sculpture à neuf soit au plus égale à 45 mm.

Pour une résistance adéquate à l'arrachement des éléments de sculpture et une bonne transmission du couple moteur en sol meuble, l'épaisseur circonférentielle des blocs de sculpture ou des barrettes, mesurée à mi-distance entre le fond de sculpture et la surface de roulement et dans le plan circonférentiel passant au centre des parties axialement extérieures de la bande de roulement, est au moins égale à 55 mm. Par ailleurs une solution préférée pour limiter les contraintes thermiques tout en conservant une résistance à l'arrachement des éléments de sculpture pour l'usage des pulvérisateurs, est que l'épaisseur circonférentielle de la sculpture soit au plus égale à 75mm. Cette caractéristique géométrique des blocs de sculpture ou des barrettes est la plus pertinente vis-à-vis des fissurations sous des contraintes thermiques des mélanges à proximité des extrémités axiales des couches de sommet. Cette distance circonférentielle est la distance sur laquelle le bloc de sculpture ou la barrette influence le fonctionnement des couches de sommet, par les déformations des couches de sommet que ladite barrette implique lors du roulage sur un sol peu déformable et par l'isolement thermique vis-à-vis de l'air extérieur qu'elle génère.

Dans ces conditions, pour qu'une armature de sommet comprenant au plus 4 couches de sommet ait une endurance équivalente aux armatures de sommet à six couches de sommet vendues sur le marché, il est essentiel que les éléments de renforcement des dites couches de sommet aient une force à la rupture au moins égale à 32 daN, mesurée selon la norme désignée D885/D885M - 10A (2014) et qu'ils soient composés d'au moins un toron d'aramide et d'au moins un toron de PET ou de nylon. En effet pour un bon contrôle de la résistance aux sollicitations thermiques, il est essentiel que les éléments de renforcement des couches de sommet comprennent au moins un toron d'aramide, renfort non fusible et donc non thermosensible aux niveaux de sollicitations thermiques présentes dans le sommet du pneumatique. Par ailleurs, l'aramide a une très bonne résistance aux fortes déformations et pour résister aux efforts de traction, le toron d'aramide doit avoir une force à la rupture au moins égale à 30 daN. Cependant il est essentiel que le toron d'aramide soit associé à au moins un toron de PET ou de nylon dont le comportement en compression protègera l'aramide plus sensible à la rupture en compression.

Une solution préférée est que les éléments de renforcement des couches de travail soient constitués d'un toron d'aramide et d'un toron de PET ou un toron de nylon, afin de limiter l'épaisseur des couches.

Il est avantageux que les éléments de renforcement des couches de travail soient constitués d'un toron d'aramide et d'un toron de PET, le PET ayant une moindre capacité à absorber l'eau que le nylon, point important pour les pneumatiques de véhicule agricole, l'eau dégradant les propriétés des matériaux caoutchouteux enrobant les éléments de renforcement.

Pour une bonne résistance aux efforts de traction à forte déformation, il est préféré que le toron d'aramide des éléments de renforcement des couches de travail, ait une masse linéique au moins égale à 160 g par km.

Pour une bonne résistance aux efforts de compression, il est préféré que le toron de PET des éléments de renforcement des couches de travail, ait une masse linéique au moins égale à 140 g par km.

La solution préférée est un pneumatique dans lequel les éléments de renforcement des 4 couches de travail sont des câbles hybrides constitués d'un toron d'aramide d'une masse linéique comprise entre 160 et 180 g par km et d'un toron de PET d'une masse linéique comprise entre 140 et 160 g par km, les éléments de renforcement des couches de travail étant disposés dans les couches de travail selon un pas compris entre 0.8 mm et 1 mm.

La solution est parfaitement adaptée à des usages pour un indice de vitesse E à 70 km/h et ses impacts thermiques.

La solution est parfaitement utilisable pour des pneumatiques dont l'indice de charge est au moins égal à 173 et d'usage standardisé VF « Very High Flexion ». Elle est adaptée aux pneumatiques dont la pression de gonflage du pneumatique minimale autorisée lors d'une utilisation sur sol meuble, est inférieure ou égale à 1.8 bar et également à ceux dont une pression de gonflage maximale du pneumatique pour une utilisation sur route asphaltée est au moins égale à 4.2 bar.

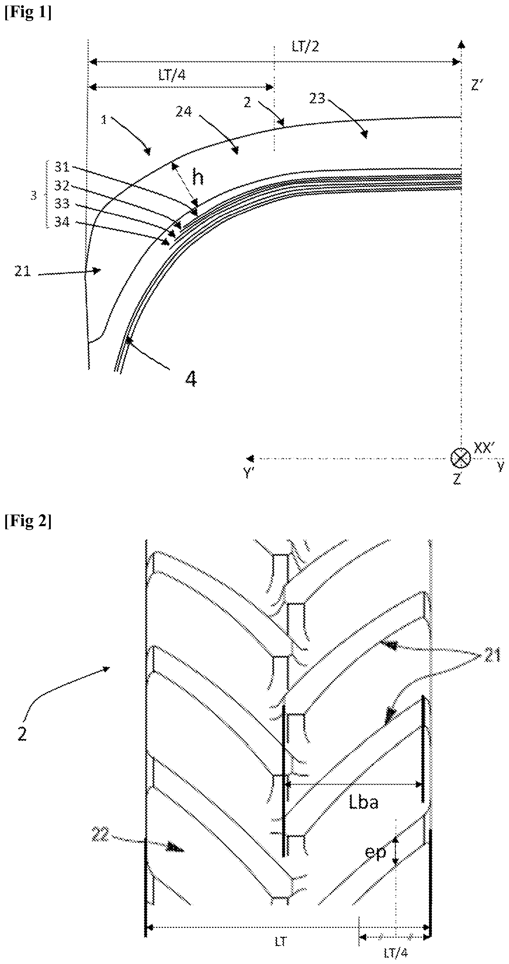

Les caractéristiques de l'invention sont illustrées par les figures 1 et 2 schématiques et non représentées à l'échelle :
- Figure 1 : schéma d'une demi-coupe méridienne du pneumatique selon l'invention
- Figure 2 : portion de la sculpture du pneumatique selon l'invention

La figure 1 [Fig 1] représente une portion du sommet du pneumatique selon l'invention dans un plan méridien YZ passant par l'axe de rotation YY' du pneumatique. Le pneumatique 1 pour véhicule agricole pulvérisateur de grande dimension, comprend une armature de sommet 3 radialement intérieure à une bande de roulement 2 et radialement extérieure à une armature de carcasse 4. L'armature de sommet 3 comprend quatre couches de sommet (31, 32, 33, 34), comprenant chacune des éléments de renforcement textile hybride comprenant au moins un toron d'aramide, enrobés dans un matériau élastomérique, parallèles entre eux et formant, avec une direction circonférentielle (XX'), un angle A au moins égal à 15° (non représenté) et au plus égal à 45°. L'armature de carcasse 4 comprend une ou plusieurs couches de carcasse comprenant des éléments de renforcement textiles enrobés dans un matériau élastomérique, parallèles entre eux et formant, avec la direction circonférentielle (XX'), un angle au moins égal à 85° et au plus égal à 95°. La bande de roulement 2 comprend des blocs de sculpture 21, ici des blocs continus nommés habituellement barrettes d'une hauteur radiale h au moins égale à 30 mm. La bande de roulement a une largeur axiale LT et comprend une partie centrale 23 d'une largeur axiale LT/2 et deux parties 24 axialement extérieures chacune d'une largeur axiale LT/4. Les barrettes ou blocs de sculpture ont une largeur axiale Lba supérieure à 0.8*LT/4.

La figure 2 [Fig 2] représente une portion de la bande de roulement 2 d'un pneumatique pour véhicule agricole pulvérisateur. La bande de roulement 2, d'une largeur axiale LT, comprend des blocs de sculpture 21, en l'occurrence des barrettes et des creux 22 permettant une bonne adhérence sur sol meuble. Les blocs de sculpture 21 sur les parties axialement extérieures du pneumatique, ont une largeur axiale Lba supérieure à 80% de LT/4. En roulage, l'épaisseur des barrettes augmentant les sollicitations thermiques, ce type de bande de roulement génère des cycles de compression/extension des renforts des couches de sommet, auxquels résistent mieux les renforts hybrides comprenant de l'aramide selon l'invention et un toron de PET ou de Nylon. Pour résister à l'arrachement, les barrettes ont une épaisseur circonférentielle ep mesurée à mi-hauteur sculpture dans le plan circonférentiel passant au centre de chaque partie axialement extérieure de la bande de roulement, au moins égale à 55mm.

L'invention a été plus particulièrement mise en oeuvre pour un pneumatique agricole de dimension VF380/90 R46. Le pneumatique selon l'état de l'art comprend 6 couches de sommet dont les éléments de renforcements sont constitués de trois torons de rayonne d'une masse linéique de 244 g par km, les éléments de renforcement étant disposés à un pas de 0,95 mm. La sculpture est composée de barrettes de 41 mm de hauteur radiale, d'une épaisseur circonférentielle ep mesurée au milieu de chaque partie axialement extérieure de 69 mm et d'une largeur axiale représentant 51% de la largeur totale de la bande de roulement.

Le pneumatique selon l'invention est identique au témoin excepté qu'il comprend 4 couches de sommet dont les éléments de renforcement sont des câbles hybrides constitués d'un toron d'aramide d'une masse linéique égale à 167 g par km et d'un toron de PET d'une masse linéique égale à 144 g par km, les éléments de renforcement des couches de travail étant disposés selon un pas égal à 0.85 mm. Le toron d'aramide a une force à la rupture égale à 35 daN, les éléments de renforcement ayant une force à rupture égale à 37 daN.

Le pneumatique selon l'invention permet un gain de 7.5 kg soit 50% sur la masse des couches de sommet et a été testé en endurance. Les inventeurs ont testé l'invention en comparant la durée de vie, du point de vue de l'endurance de l'armature de sommet, des deux pneumatiques pour pulvérisateurs. Un roulage sur piste en terre battue à 27 km/h a été réalisé sur une distance de 28000 km, sous une charge nominale augmentée de 25% soit 8125 kg et à une pression nominale de 4.4 bars. Le pneumatique selon l'invention avec une masse inférieure, a réalisé un nombre équivalent de kilomètres que le pneumatique selon l'état de l'art sans apparition d'endommagement des couches de sommet, démontrant l'intérêt de l'invention de réaliser un pneumatique plus léger à endurance équivalente.

## Revendications

1. Pneumatique radial (1) pour véhicule de type agricole, VF (« Very high Flexion ») selon le standard ETRTO 2020 dont l'indice de vitesse est au moins égal à D pour une vitesse maximale au moins égale à 65 km/h, destiné à être monté sur une jante dont le diamètre est au moins égal à 42 pouces, dont la pression d'utilisation maximale est au moins égale à 3.2 bars et dont l'indice de charge est au moins égal à 170, comprenant :
- Une bande de roulement (2) destinée à venir en contact avec un sol par l'intermédiaire d'une surface de roulement, d'une largeur axiale LT et comprenant une partie centrale d'une largeur axiale LT/2 et deux parties axialement extérieures chacune d'une largeur axiale LT/4,
- Les deux parties axialement extérieures comprenant des blocs de sculpture (21) d'une hauteur radiale h au moins égale à 30 mm, ces blocs ayant une longueur axiale au moins égale à 80% de la largeur axiale LT/4 des parties axialement extérieures de la bande de roulement et d'une épaisseur circonférentielle ep au moins égale à 55 mm,
- Une armature de sommet (3) radialement intérieure à la bande de roulement(2), comprenant au plus 4 couches de travail (31, 32, 33, 34),
ledit pneumatique étant **caractérisé en ce que**
chaque couche de travail comprend des éléments de renforcement textiles parallèles entre eux enrobés d'un matériau caoutchouteux et formant des angles avec la direction circonférentielle, au moins égaux à 15° et au plus égaux à 45°, lesdits éléments de renforcement textiles comprenant au moins un toron constitué par un assemblage d'au moins deux fibres textiles, et **en ce que**
les éléments de renforcement des couches de travail (31, 32, 33, 34) ont une force à la rupture en traction au moins égale à 32 daN et comprennent un toron de polyamide aromatique (aramide) et un toron de polyéthylène téréphtalate (PET) ou de polyamide aliphatique, le toron d'aramide ayant une force à la rupture au moins égale à 30 daN, la force à la rupture étant mesurée selon la norme D885/D885M-10A (2014).

2. Pneumatique selon la revendication 1 dans lequel les éléments de renforcement des couches de travail (31, 32, 33, 34) sont constitués d'un toron d'aramide et d'un toron de PET ou de nylon.

3. Pneumatique selon l'une quelconque des revendications précédentes dans lequel les éléments de renforcement des couches de travail (31, 32, 33, 34) sont constitués d'un toron d'aramide et d'un toron de PET.

4. Pneumatique selon la revendication 3 dans lequel le toron de PET des éléments de renforcement des couches de travail (31, 32, 33, 34) a une masse linéique au moins égale à 140 g par km.

5. Pneumatique selon l'une quelconque des revendications précédentes dans lequel le toron d'aramide des éléments de renforcement des couches de travail (31, 32, 33, 34), a une masse linéique au moins égale à 160 g par km.

6. Pneumatique selon l'une quelconque des revendications précédentes dans lequel les éléments de renforcement des 4 couches de travail (31, 32, 33, 34) sont des câbles hybrides constitués d'un toron d'aramide d'une masse linéique comprise entre 160 et 180 g par km et d'un toron de PET d'une masse linéique comprise entre 140 et 160 g par km, les éléments de renforcement des couches de travail étant disposés dans les couches de travail selon un pas compris entre 0.8 mm et 1 mm.

7. Pneumatique selon l'une quelconque des revendications précédentes dans lequel l'indice de charge est au moins égal à 173.

8. Pneumatique selon l'une quelconque des revendications précédentes dans lequel une pression de gonflage recommandée, lors d'une utilisation sur sol meuble, est inférieure ou égale 1.8 bar.

9. Pneumatique selon l'une quelconque des revendications précédentes dans lequel une pression de gonflage recommandée, pour une utilisation sur route asphaltée, est au moins égale à 4.2 bar.

10. Pneumatique selon l'une quelconque des revendications précédentes dans lequel l'indice de vitesse, est au moins égal à E pour une vitesse maximale égale à 70 km/h.

## Patentansprüche

1. Radialreifen (1) für ein landwirtschaftliches Fahrzeug, VF ("Very high Flexion") gemäß ETRTO-Standard 2020, dessen Geschwindigkeitsindex mindestens D für eine Maximalgeschwindigkeit von mindestens 65 km/h beträgt, der dazu bestimmt ist, auf eine Felge montiert zu werden, deren Durchmesser mindestens 42 Zoll beträgt, dessen maximaler Betriebsdruck mindestens 3,2 bar beträgt und dessen Tragfähigkeitsindex mindestens 170 beträgt, beinhaltend:
- eine Lauffläche (2), die dazu bestimmt ist, mittels einer Laufoberfläche mit einem Boden in Kontakt zu kommen, mit einer axialen Breite LT und beinhaltend einen mittleren Teil mit einer axialen Breite LT/2 und zwei axial außen liegende Teile mit jeweils einer axialen Breite LT/4,
- wobei die zwei axial außen liegenden Teile Profilblöcke (21) mit einer radialen Höhe h von mindestens 30 mm, wobei diese Blöcke eine axiale Länge von mindestens 80 % der axialen Breite LT/4 der axial außen liegenden Teile der Lauffläche aufweisen, und mit einer Umfangsdicke ep von mindestens 55 mm beinhalten,
- eine Scheitelbewehrung (3), die zu der Lauffläche (2) radial innen liegend ist und höchstens 4 Arbeitslagen (31, 32, 33, 34) beinhaltet, wobei der Reifen **dadurch gekennzeichnet ist, dass** jede Arbeitslage textile Verstärkungselemente beinhaltet, die untereinander parallel sind, von einem Kautschukmaterial umhüllt sind und mit der Umfangsrichtung Winkel von mindestens 15° und höchstens 45° bilden, wobei die textilen Verstärkungselemente mindestens eine Litze beinhalten, die aus einer Anordnung von mindestens zwei textilen Fasern besteht, und dass die Verstärkungselemente der Arbeitslagen (31, 32, 33, 34) eine Bruchkraft bei Zugbeanspruchung von mindestens 32 daN aufweisen und eine Litze aus aromatischem Polyamid (Aramid) und eine Litze aus Polyethylenterephthalat (PET) oder aus aliphatischem Polyamid beinhalten, wobei die Aramidlitze eine Bruchkraft von mindestens 30 daN aufweist, wobei die Bruchkraft gemäß der Norm D885/D885M-10A (2014) gemessen wird.

2. Reifen nach Anspruch 1, wobei die Verstärkungselemente der Arbeitslagen (31, 32, 33, 34) aus einer Aramidlitze und einer PET- oder Nylonlitze bestehen.

3. Reifen nach einem beliebigen der vorhergehenden Ansprüche, wobei die Verstärkungselemente der Arbeitslagen (31, 32, 33, 34) aus einer Aramidlitze und einer PET-Litze bestehen.

4. Reifen nach Anspruch 3, wobei die PET-Litze der Verstärkungselemente der Arbeitslagen (31, 32, 33, 34) eine längenbezogene Masse von mindestens 140 g pro km aufweist.

5. Reifen nach einem beliebigen der vorhergehenden Ansprüche, wobei die Aramidlitze der Verstärkungselemente der Arbeitslagen (31, 32, 33, 34) eine längenbezogene Masse von mindestens 160 g pro km aufweist.

6. Reifen nach einem beliebigen der vorhergehenden Ansprüche, wobei die Verstärkungselemente der 4 Arbeitslagen (31, 32, 33, 34) Hybridseile sind, die aus einer Aramidlitze mit einer längenbezogenen Masse zwischen 160 und 180 g pro km und einer PET-Litze mit einer längenbezogenen Masse zwischen 140 und 160 g pro km bestehen, wobei die Verstärkungselemente der Arbeitslagen gemäß einer Schrittweite zwischen 0,8 mm und 1 mm in den Arbeitslagen angeordnet sind.

7. Reifen nach einem beliebigen der vorhergehenden Ansprüche, wobei der Tragfähigkeitsindex mindestens 173 beträgt.

8. Reifen nach einem beliebigen der vorhergehenden Ansprüche, wobei ein empfohlener Fülldruck bei einer Verwendung auf weichem Boden 1,8 bar oder weniger beträgt.

9. Reifen nach einem beliebigen der vorhergehenden Ansprüche, wobei ein empfohlener Fülldruck bei einer Verwendung auf einer Asphaltstraße mindestens 4,2 bar beträgt.

10. Reifen nach einem beliebigen der vorhergehenden Ansprüche, wobei der Geschwindigkeitsindex mindestens E für eine Maximalgeschwindigkeit von 70 km/h beträgt.

## Claims

1. Radial tyre (1) for an agricultural-type vehicle, which tyre is VF ("Very high Flexion") according to the 2020 ETRTO standard, which has a speed index at least equal to D for a maximum speed at least equal to 65 km/h, which tyre is intended to be mounted on a rim with a diameter at least equal to 42 inches, the maximum use pressure of which is at least equal to 3.2 bar and the load index of which is at least equal to 170, comprising:
- a tread (2) intended to come into contact with the ground via a tread surface, which tread has an axial width LT and comprises a central portion with an axial width LT/2 and two axially outer portions, each with an axial width LT/4,
- the two axially outer portions comprising tread pattern blocks (21) with a radial height h at least equal to 30 mm, these blocks having an axial length at least equal to 80% of the axial width LT/4 of the axially outer portions of the tread and having a circumferential thickness ep at least equal to 55 mm,
- a crown reinforcement (3) radially on the inside of the tread (2), comprising at most 4 working layers (31, 32, 33, 34),
- said tyre being **characterized in that** each working layer comprises mutually parallel textile reinforcing elements which are coated in a rubber material and form angles at least equal to 15° and at most equal to 45° with the circumferential direction, the said textile reinforcing elements comprising at least one strand consisting of an assembly of at least two textile fibres, **and in that**
- the reinforcing elements of the working layers (31, 32, 33, 34) have a tensile breaking force at least equal to 32 daN and comprise an aromatic polyamide (aramid) strand and a polyethylene terephthalate (PET) or aliphatic polyamide strand, the aramid strand having a breaking force at least equal to 30 daN, the breaking force being measured according to the standard denoted D885/D885M - 10A (2014).

2. Tyre according to Claim 1, wherein the reinforcing elements of the working layers (31, 32, 33, 34) consist of an aramid strand and a PET or nylon strand.

3. Tyre according to either one of the preceding claims, wherein the reinforcing elements of the working layers (31, 32, 33, 34) consist of an aramid strand and a PET strand.

4. Tyre according to Claim 3, wherein the PET strand of the reinforcing elements of the working layers (31, 32, 33, 34) has a linear density at least equal to 140 g per km.

5. Tyre according to any one of the preceding claims, wherein the aramid strand of the reinforcing elements of the working layers (31, 32, 33, 34) has a linear density at least equal to 160 g per km.

6. Tyre according to any one of the preceding claims, wherein the reinforcing elements of the 4 working layers (31, 32, 33, 34) are hybrid cords consisting of an aramid strand with a linear density of between 160 and 180 g per km and a PET strand with a linear density of between 140 and 160 g per km, the reinforcing elements of the working layers being disposed in the working layers at a pitch of between 0.8 mm and 1 mm.

7. Tyre according to any one of the preceding claims, wherein the load index is at least equal to 173.

8. Tyre according to any one of the preceding claims, wherein a recommended inflation pressure, when the tyre is being used on loose ground, is less than or equal to 1.8 bar.

9. Tyre according to any one of the preceding claims, wherein a recommended inflation pressure, when the tyre is being used on asphalted roads, is at least equal to 4.2 bar.

10. Tyre according to any one of the preceding claims, wherein the speed index is at least equal to E for a maximum speed equal to 70 km/h.
